(19) Europäisches Patentamt
European Patent Office
Office européen des brevets

(11) **EP 4 645 425 A2**

(12) **EUROPEAN PATENT APPLICATION**

(43) Date of publication:
**05.11.2025 Bulletin 2025/45**

(21) Application number: **25167843.9**

(22) Date of filing: **01.04.2025**

(51) International Patent Classification (IPC):
*H01M 4/131* (2010.01)    *H01M 4/136* (2010.01)
*H01M 4/36* (2006.01)    *H01M 4/525* (2010.01)
*H01M 4/58* (2010.01)    *H01M 4/62* (2006.01)

(52) Cooperative Patent Classification (CPC):
**H01M 4/364; H01M 4/131; H01M 4/136;
H01M 4/525; H01M 4/5825;** H01M 4/623;
H01M 4/625; H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 KR 20240057169**

(71) Applicant: **SAMSUNG SDI CO., LTD.
Yongin-si, Gyeonggi-do 17084 (KR)**

(72) Inventors:
• **KIM, Young-Ki
Yongin-si (KR)**
• **CHOI, Aram
Yongin-si (KR)**
• **KIM, Sangmi
Yongin-si (KR)**
• **DOO, Sungwook
Yongin-si (KR)**
• **KANG, Gwiwoon
Yongin-si (KR)**
• **LEE, Soonrewl
Yongin-si (KR)**

(74) Representative: **Marks & Clerk LLP
15 Fetter Lane
London EC4A 1BW (GB)**

(54) **POSITIVE ELECTRODE AND RECHARGEABLE LITHIUM BATTERY INCLUDING THE SAME**

(57) A positive electrode for a rechargeable lithium battery is disclosed, including a current collector, a first active material layer on the current collector, the first active material layer including a first particle, a first binder, and a first conductive material, and a second active material layer on the first active material layer, the second active material layer including a second particle, a second binder, and a second conductive material. The first particle contains a layered compound, and the second particle contains an olivine structured compound, and the second particle is in the form of a secondary particle constituted with a plurality of primary particles. Also disclosed is a rechargeable lithium battery including the positive electrode.

FIG. 9

EP 4 645 425 A2

**Description**

BACKGROUND

The present disclosure relates to a positive electrode, and to a rechargeable lithium battery including the positive electrode, and more particularly, to a positive electrode including an olivine-based lithium compound, and a rechargeable lithium battery including the positive electrode.

The increasing use of battery-powered electronics, such as, e.g., mobile phones, laptop computers, and electric vehicles, has driven an increase in demand for rechargeable batteries provided with high energy density and high capacity. Accordingly, improving the performance of rechargeable lithium batteries may be advantageous.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

SUMMARY

The present disclosure includes a positive electrode for a rechargeable lithium battery, capable of increasing the binding force of a positive electrode active material layer with respect to a current collector, reducing resistance of an electrode plate, and facilitating preparation of an electrode plate. The present disclosure also includes a rechargeable lithium battery having desired or improved capacity and lifetime characteristics along with high operating voltage and energy density.

According to a first aspect of the present invention there is provided a positive electrode for a rechargeable lithium battery including a current collector, a first active material layer on the current collector, including a first particle, a first binder, and a first conductive material, and a second active material layer on the first active material layer, including a second particle, a second binder, and a second conductive material. The first particle contains a layered compound of Formula 1 below, the second particle contains an olivine structured compound of Formula 2 below, the second particle is in the form of a secondary particle constituted with a plurality of primary particles, the first binder and the first conductive material constitute a first functional additive, the second binder and the second conductive material constitute a second functional additive, and a weight ratio of the first functional additive in the first active material layer is lower than a weight ratio of the second functional additive in the second active material layer,

$$\text{Formula 1:} \qquad Li_{a1}Ni_{x1}Co_{y1}Mn_{z1}B1_{c1}O_{2-b1}$$

In Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 \leq b1 \leq 0.05$, and $x1 + y1 + z1 + c1 = 1$ are satisfied, and B1 includes at least one of Ti, Mg, V, Nb, and Al, and

$$\text{Formula 2:} \qquad Li_{a2}Mn_{x2}Fe_{y2}B2_{z2}PO_{4-b2}$$

in Formula 2 above, $0.8 \leq a2 \leq 1.2$, $0.4 \leq x2 \leq 0.8$, $0 \leq y2 \leq 0.6$, $0 \leq z2 \leq 0.05$, $0 \leq b2 \leq 0.05$, and $x2 + y2 + z2 = 1$ are satisfied, and B2 includes at least of Al, Ti, V, and Mg.

According to a second aspect of the present invention there is provided a rechargeable lithium battery including the positive electrode described above.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, explain principles of the present disclosure. In the drawings:

FIG. 1 is a simplified conceptual view illustrating a rechargeable lithium battery according to example embodiments of the present disclosure;
FIGS. 2 to 5 are schematic views illustrating a rechargeable lithium battery according to an example embodiment, where FIG. 2 illustrates a cylindrical battery, FIG. 3 illustrates a prismatic battery, and FIGS. 4 and 5 illustrate pouch-type batteries;
FIG. 6 is a cross-sectional view illustrating a positive electrode for a rechargeable battery according to example embodiments of the present disclosure;

FIGS. 7 to 9 are enlarged views illustrating a first active material layer according to example embodiments of the present disclosure;

FIGS. 10 and 11 are enlarged views illustrating a second active material layer according to an example embodiment of the present disclosure;

FIG. 12 is an enlarged view illustrating a positive electrode active material layer according to Comparative Examples of the present disclosure;

FIG. 13 is a pair of scanning electron microscope (SEM) images showing a first particle according to example embodiments of the present disclosure;

FIG. 14 is a pair of SEM images showing third particles according to an example embodiment of the present disclosure; and

FIG. 15 is a pair of SEM images showing second particles according to an example embodiment of the present disclosure.

## DETAILED DESCRIPTION

In order to sufficiently understand the configuration and effects of the present disclosure, example embodiments of the present disclosure are described with reference to the accompanying drawings. It should be noted, however, that the present disclosure is not limited to the following example embodiments, and may be implemented in various forms and variously modified. The example embodiments herein are provided so that present disclosure are thorough and complete and fully conveys the scope of the present disclosure to those skilled in the art.

Herein, it is understood that when a component is referred to as being "on" another component, the component may be directly on another component, or an intervening third component may be present. In addition, in the drawings, thicknesses of components are exaggerated for effectively describing technical contents. Like reference numerals refer to like elements throughout.

The example embodiments described herein explain with reference to the cross-sectional views and/or plan views as ideal example views of the present disclosure. In the drawing, the thicknesses of films and regions are exaggerated for effective description of the technical contents. Thus, regions presented as an example in the drawings have general properties, and shapes of the exemplified areas are used to illustrate a specific shape of a device region. Therefore, this should not be construed as limited to the scope of the present disclosure. Although the terms such as first, second, and third are used to describe various components in various example embodiments herein, the components should not be limited to these terms. These terms are used only to distinguish one component from another component. Example embodiments described and exemplified herein include complementary embodiments thereof.

Terms used herein are not for limiting the present disclosure but for describing the example embodiments. As used herein, the singular forms include the plural forms as well, unless the context clearly indicates otherwise. The meaning of "comprises" and/or "comprising" used herein does not exclude the presence or addition of one or more other components besides a mentioned component.

When the terms "about" or "substantially" are used in this specification in connection with a numerical value, it is intended that the associated numerical value include a tolerance of $\pm 10\%$ around the stated numerical value. The expression "up to" includes amounts of zero to the expressed upper limit and all values therebetween. When ranges are specified, the range includes all values therebetween such as increments of 0.1%.

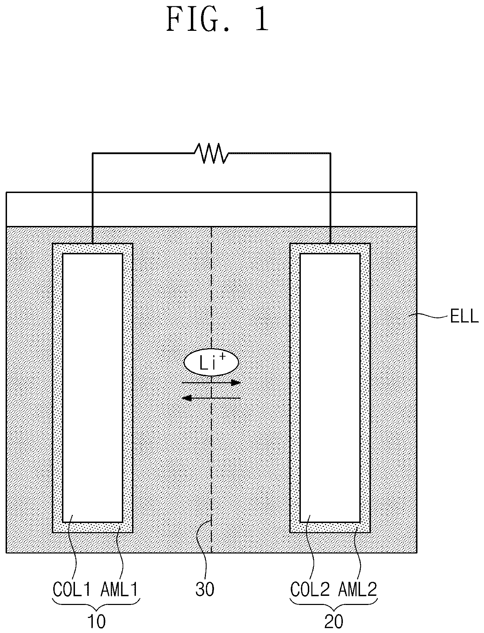

FIG. 1 is a simplified conceptual diagram illustrating a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be disposed between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

### Positive Electrode 10

The positive electrode 10 for a rechargeable lithium battery includes a current collector COL1 and a positive electrode active material layer AML1 on the current collector. The positive electrode active material layer AML1 includes a positive electrode active material, a binder and a conductive material (e.g., an electrically conductive material).

For example, the positive electrode 10 may further include an additive that can constitute a sacrificial positive electrode.

Al may be included as the current collector COL1, but the example embodiment of the present disclosure is not limited thereto.

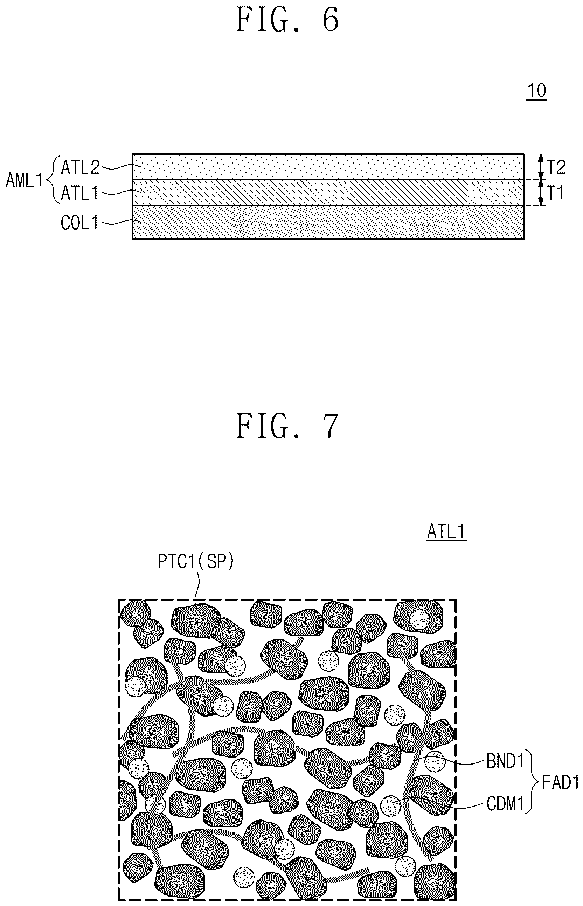

The positive electrode 10 is described in detail below with reference to FIG. 6.

**Negative Electrode 20**

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include a range of about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other, and to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly-amideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is included as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., that does not cause an undesirable chemical change in the rechargeable lithium battery), and that conducts electrons, may be included in the battery. Non-limiting examples thereof may include a carbon-based material such as or including at least one of natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

The current collector COL2 may include at least one of a copper foil, a nickel foil, a stainless steel foil, a titanium foil, a nickel foam, a copper foam, a polymer substrate coated with a conductive metal, or a combination thereof.

**Negative Electrode Active Material**

The negative electrode active material in the negative electrode active material layer AML2 may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. Examples of the crystalline carbon may be or include graphite such as irregular, planar, flaky, spherical, or fibrous natural graphite or artificial graphite, and examples of the amorphous carbon may be or include at least one of soft carbon (low-temperature fired carbon), hard carbon, mesophase pitch carbide, fired cokes, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be included in combination with a carbon-based negative electrode active material.

**Separator 30**

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof, on one or both surfaces of the porous substrate.

The porous substrate may be or include a polymer film formed of or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON), or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

**Electrolyte Solution ELL**

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be included alone or in combination of two or more solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

In an example, the lithium salt dissolved in the organic solvent supplies lithium ions in a battery, enables a basic operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

## Rechargeable Lithium Battery

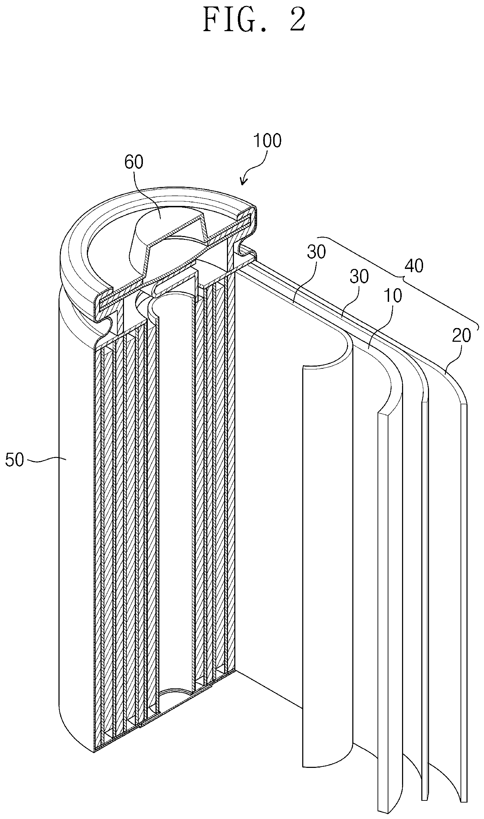

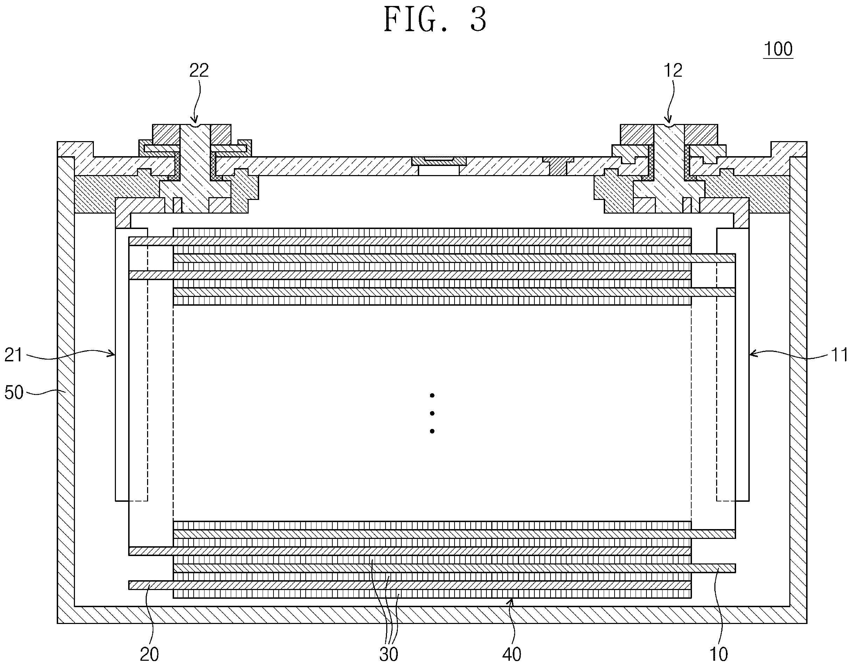

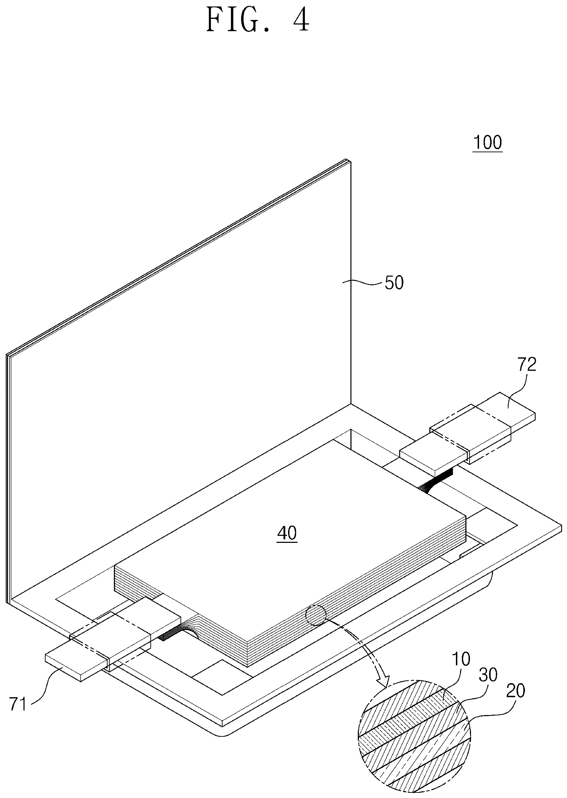

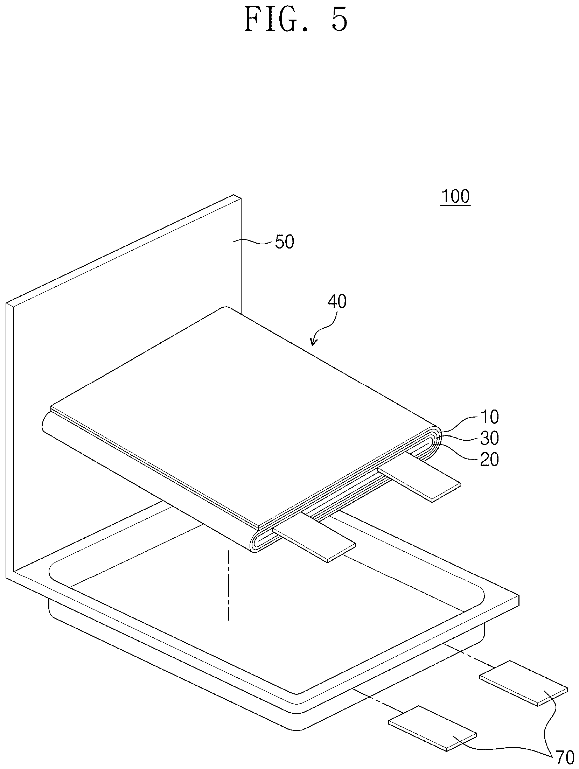

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, or may include a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is a cross-sectional view illustrating a positive electrode for a rechargeable lithium battery according to example embodiments of the present disclosure. Referring to FIG. 6, as described above, the positive electrode 10 includes a current collector COL1 and a positive electrode active material layer AML1. The positive electrode active material layer AML1 is located on the current collector COL1.

The positive electrode active material layer AML1 includes positive electrode active materials PTC1 and PTC2, and may also include positive electrode active material PTC3, all of which are described below. The positive electrode active material layer AML1 may contain a range of about 90 wt% to about 99 wt% of the positive electrode active materials PTC1 and PTC2, or PTC1, PTC2, and PTC3, with respect to 100 wt% of the positive electrode active material layer AML1.

The positive electrode active material layer AML1 includes binders BND1 and BND2 and conductive materials CDM1 and CDM2, which are described below. The positive electrode active material layer AML1 may contain a range of about 2.4 wt% to about 6 wt% of each, or at least one, of the binders BND1 and BND2 and the conductive materials CDM1 and CDM2 with respect to 100 wt% of the positive electrode active material layer AML1.

The positive electrode active material layer AML1 includes a first active material layer ATL1 and a second active material layer ATL2. The positive electrode active material layer AML1 includes the first active material layer ATL1 and the second active material layer ATL2, and may thus contain a nano-sized olivine-based compound in large quantities and with increased binding force with respect to a current collector, thereby facilitating the preparation of an electrode plate and reducing the resistance of an electrode plate. In addition, a rechargeable lithium battery having desired or improved performance may be provided.

The first active material layer ATL1 may have a thickness T1. In an example embodiment, T1 may increase with a rise in weight of the first particle PTC1 included in the first active material layer ATL1. The second active material layer ATL2 may have a thickness T2. In an example embodiment, T2 may increase with a rise in weight of the second particle PTC2 (or the second particle PTC2 and the third particle PTC3) included in the second active material layer ATL2.

The thickness T1 of the first active material layer ATL1 may be smaller than the thickness T2 of the second active material layer ATL2. For example, a thickness ratio T1:T2 of the first active material layer ATL1 and the second active material layer ATL2 may be in a range of about 1:99 to about 49:51. When the thickness ratio T1:T2 of the first active material layer ATL1 and the second active material layer ATL2 satisfies the numerical range described above, the positive electrode active material layer AML1 may have improved binding force with respect to the current collector COL1, and may thus facilitate preparation of an electrode plate and reduce resistance of an electrode plate. In addition, a rechargeable lithium battery having desired or improved performance may be provided.

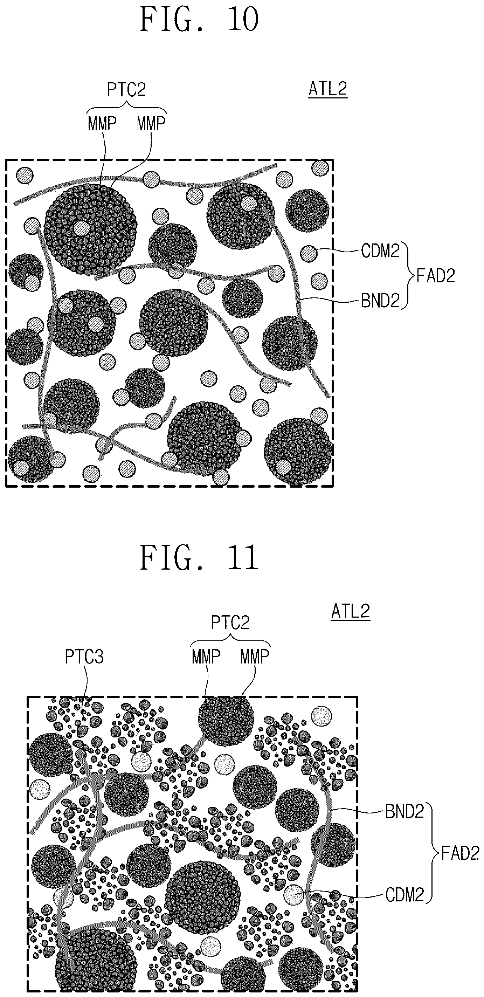

FIGS. 7 to 9 are enlarged views showing a first active material layer ATL1 according to example embodiments of the present disclosure. FIGS. 10 and 11 are enlarged views showing a second active material layer ATL2 according to example embodiments of the present disclosure.

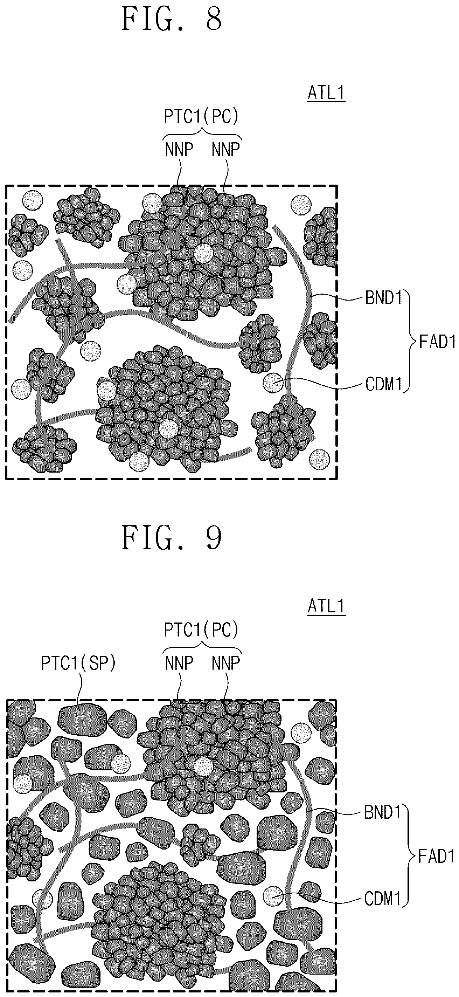

Referring to FIGS. 7 and 9, the first active material layer ATL1 includes a first particle PTC1 and a first functional additive FAD1. The first functional additive FAD1 includes a first binder BND1 and a first conductive material CDM1.

The first active material layer AML1 includes the first active material layer ATL1 containing the first particle PTC1, and may thus reduce the content of the first functional additive FAD1. For example, a weight ratio of the first functional additive FAD1 in the first positive electrode active material layer ATL1 may be in a range of about 0.024 to about 0.04. The weight ratio of the first functional additive FAD1 in the first active material layer ATL1 may be defined as a weight of the first functional additive FAD1 with respect to a total weight of the first active material layer.

For example, the content of the first binder BND1 may be in a range of about 1.2 parts by weight to about 2.0 parts by weight with respect to 100 parts by weight of the first active material layer ATL1. The content of the first conductive material CDM1 may be in a range of about 1.2 parts by weight to about 2.0 parts by weight with respect to 100 parts by weight of the first active material layer ATL1.

Referring to FIG. 10, the second active material layer ATL2 includes a second particle PTC2 and a second functional additive FAD2. Referring to FIG. 11, the second active material layer ATL2 may include a third particle PTC3, along with the second particle PTC2 and the second functional additive FAD2. The second functional additive FAD2 includes a second binder BND2 and a second conductive material CDM2.

The weight ratio of the second functional additive FAD2 in the second active material layer ATL2 is greater than the weight ratio of the first functional additive FAD1 in the first active material layer ATL1.

A ratio of the weight ratio of the second functional additive FAD2 to the weight ratio of the first functional additive FAD1 (weight ratio of the second functional additive/weight ratio of the first functional additive) may be in a range of about 1.1 to about 2.14. For example, in FIGS. 9 and 10, a ratio of the weight ratio of the second functional additive FAD2 to the weight ratio of the first functional additive FAD1 (weight ratio of the second functional additive/weight ratio of the first functional additive) may be in a range of about 1.1 to about 2.14. For example, in FIGS. 9 and 11, a ratio of the weight ratio of the second functional additive FAD2 to the weight ratio of the first functional additive FAD1 (weight ratio of the second functional additive/weight ratio of the first functional additive) may be in a range of about 1.65 to about 2.14. When the ratio of the weight ratio of the second functional additive FAD2 to the weight ratio of the first functional additive FAD1 satisfies any of the numerical ranges described above, the positive electrode active material layer AML1 has an improved binding force with respect to the current collector COL1, and may thus facilitate the preparation of an electrode plate and reduce resistance of an electrode plate. In addition, a rechargeable lithium battery having desired or improved performance may be provided.

For example, a weight ratio of the second functional additive FAD2 in the second positive electrode active material layer ATL2 may be in a range of about 0.03 to about 0.05. For example, in FIG. 10, a weight ratio of the second functional additive FAD2 in the second positive electrode active material layer ATL2 may be in a range of about 0.03 to about 0.04. For example, in FIG. 11, a weight ratio of the second functional additive FAD2 in the second positive electrode active material layer ATL2 may be in a range of about 0.04 to about 0.05. The weight ratio of the second functional additive FAD2 in the second active material layer ATL2 may be defined as a weight of the second functional additive FAD2 with respect to a total weight of the second active material layer.

The content of the second binder BND2 may be greater than the content of the first binder BND1. For example, the content of the second binder BND2 may be in a range of about 1.5 parts by weight to about 4 parts by weight, about 3 parts by weight to about 4 parts by weight or about 1.5 parts by weight to about 2.5 parts by weight, with respect to 100 parts by weight of the second active material layer ATL2. In FIG. 10, the content of the second binder BND2 may be in a range of about 1.5 parts by weight to about 2.0 parts by weight with respect to 100 parts by weight of the second active material layer ATL2. In FIG. 11, the content of the second binder BND2 may be in a range of about 2.0 parts by weight to about 2.5 parts by weight with respect to 100 parts by weight of the second active material layer ATL2.

The content of the second conductive material CDM2 may be greater than the content of the first conductive material CDM1. The content of the second conductive material CDM2 may be in a range of about 1.5 parts by weight to about 4 parts by weight, about 3 parts by weight to about 4 parts by weight or about 1.5 parts by weight to about 2.5 parts by weight with respect to 100 parts by weight of the second active material layer ATL2. In FIG. 10, the content of the second conductive material CDM2 may be in a range of about 1.5 parts by weight to about 2.0 parts by weight with respect to 100 parts by weight of the second active material layer ATL2. In FIG. 11, the content of the second conductive material CDM2 may be in a range of about 2.0 parts by weight to about 2.5 parts by weight with respect to 100 parts by weight of the second active material layer ATL2.

The binders BND1 and BND2 may be configured to attach the positive electrode active material particles PTC1 and PTC2 and also to attach the positive electrode active material PTC1 to the current collector COL1. Typical examples of the binders BND1 and BND2 may be or include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

The conductive materials CDM1 and CDM2 may be configured to impart conductivity (e.g., electrical conductivity) to the electrode. Any material that does not cause chemical change (e.g., does not cause an undesirable chemical change in the rechargeable lithium battery), and that conducts electrons may be included in the battery. Examples of the conductive materials CDM1 and CDM2 may include a carbon-based material such as or including at least one of natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof.

An interface between the first active material layer ATL1 and the second active material layer ATL2 may not be clearly distinguishable through SEM images and the like. However, the interface between the first active material layer ATL1 and the second active material layer ATL2 may be inferred by changes in constituent materials and composition between the layers.

Hereinafter, the first particle PTC1, the second particle PTC2, and the third particle PTC3 are described in more detail.

**First Particle PTC1**

Referring back to FIG. 7, the first particle PTC1 may be in the form of, or include, a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be or include a particle containing several crystals. The single particle may be in an isolated form. Alternatively, the single particle may be in the form in which about 2 to about 100 single particles are attached together.

In an example embodiment, the first particle PTC1 may have a form constituted with one single particle. In an example embodiment, the first particle PTC1 may have a form in which a plurality of single particles are attached together. The positive electrode active material according to an example embodiment of the present disclosure includes the first particle PTC1 in the form of a single particle, and may thus allow rechargeable batteries to obtain high capacity and high energy density. Herein, the first particle PTC1, which is a single particle, may be defined as a small particle "SP."

In an example embodiment, the first particle PTC1 may include a first coating layer on the surface thereof. The first particle PTC1 includes the first coating layer, and may thus effectively reduce or prevent structural collapse caused by repeated charging/discharging. Accordingly, rechargeable batteries may have improved lifetime characteristics.

The first coating layer may include at least one of a boron-containing compound, an aluminium-containing compound, or a combination thereof. Metal-containing compounds in the first coating layer may be or include, for example, at least one of metal oxides, metal hydroxides, metal carbonates, composites thereof, or mixtures thereof. The metal-containing compounds may further include other metals or non-metallic elements. For example, the first coating layer may further include at least one of lithium, manganese, and/or nickel.

A method of measuring the metal content in the first coating layer of the first particle PTC1 may include performing scanning electron microscopy and energy dispersive X-ray spectroscopy (SEM-EDS) on the first particle PTC1. Through the analysis described above, the content of boron and/or aluminium in the first coating layer may be determined. In addition to SEM-EDS, methods of measuring the metal content in the first coating layer may include inductively coupled plasma-mass spectrometry (ICP-MS), inductively coupled plasma optical emission spectroscopy (ICP-OES), and the like.

The size of the first particle PTC1 may be in micro units, e.g. micrometers. With the first active material layer ATL1 including the first particle PTC1, the positive electrode active material layer AML1 may contain a nano-sized olivine-based compound in large quantities, and may have greater binding force with respect to a current collector. This, in turn, may facilitate the preparation of an electrode plate and reduce resistance of an electrode plate. In addition, examples of the disclosure may include a rechargeable lithium battery having desired or improved performance.

The first particle PTC1 may have an average particle diameter in a range of about 2 $\mu$m to about 15 $\mu$m, about 3 $\mu$m to about 10 $\mu$m, or about 2 $\mu$m to about 5 $\mu$m.

In an example embodiment, the particle diameter may be obtained by measuring a diameter by randomly selecting about 30 second particles PTC2 on an electron microscope image of a positive electrode active material, and taking a diameter of the particles at an accumulated volume of about 50 vol% in particle size distribution as the average particle diameter ($D_{50}$).

The first particle PTC1 is or includes a lithium nickel-based composite oxide. For example, the first particle PTC1 may include a high nickel-based positive electrode active material containing a high content of nickel. The high nickel-based positive electrode active material may achieve high capacity and high performance. For another example, the first particle PTC1 may include a 'mid' nickel-based positive electrode active material containing an intermediate content of nickel. The mid nickel-based positive electrode active material may achieve high capacity and high performance.

The first particle PTC1 includes a layered lithium nickel-based composite oxide represented by Formula 1 below.

Formula 1: $\qquad$ $Li_{a1}Ni_{x1}Co_{y1}Mn_{z1}B1_{c1}O_{2-b1}$

In Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 \leq b1 \leq 0.05$, and $x1 + y1 + z1 + c1 = 1$ is satisfied. For example, $c1$ may be 0.005.

B1 is a dopant with which the first particle PTC1 is doped. B1 includes at least one of Ti, Mg, V, Nb, and Al. For example, B1 may be or include Al.

Referring back to FIG. 8, for another example, the first particle PTC1 is in the form of polycrystal and may include a secondary particle in which at least two primary particles NNP are aggregated. That is, one first particle PTC1 may include a plurality of primary particles NNP aggregated together. The first particle PTC1 composed of a plurality of primary particles NNP may be amorphous. For example, the first particle PTC1 composed of a plurality of primary particles NNP may be in the shape of sphere or oval. Herein, the first particle PTC1, which is a secondary particle, may be defined as a large particle PC.

In an example embodiment, the average particle diameter ($D_{50}$) may indicate a particle diameter when a cumulative volume is about 50 volume% in a particle size distribution. The average particle diameter ($D_{50}$) of the first particle PTC1 may be a value measured using a particle size analyzer. Accordingly, the secondary particle may have an average particle diameter ($D_{50}$) in a range of about 10 $\mu$m to about 25 $\mu$m or about 12 $\mu$m to about 18 $\mu$m.

The primary particles NNP may have a particle diameter of about 8 $\mu$m or less. For example, the primary particles NNP may have a particle diameter in a range of about 2 $\mu$m to about 8 $\mu$m or about 4 $\mu$m to about 5 $\mu$m. For example, the particle diameter may indicate a diameter measured by randomly selecting about 30 primary particles NNP on an electron micrograph of a positive electrode active material. The primary particles NNP may have a substantially uniform particle diameter.

Herein, the first particle PTC1 may be present as a small particle SP (see FIG. 7) or a large particle PC (see FIG. 8). In addition, the first particle PTC1 may be or include a positive electrode active material including the small particle SP and the large particle PC.

In examples, both the small particle SP and the large particle PC may be interpreted to indicate the first particle PTC1. In addition, the first particle PTC1 may be interpreted to indicate one containing the small particle SP and the large particle PC.

In examples, referring back to FIG. 9, the case in which the first particle PTC1 is present in the mixed form of the small particle SP and the large particle PC, or as a mixture of the large particle PC and the small particle SP in a positive electrode active material, may be called bimodal. That is, the first particle PTC1 may include both a single particle and a secondary particle.

The first particle PTC1 may have a small Brunauer-Emmett-Teller (BET) specific surface area. The first particle PTC1 may have a smaller specific surface area than the second particle PTC2. For example, the first particle PTC1 may have a BET specific surface area in a range of about 0.8 $m^2$/g to about 1.2 $m^2$/g. Accordingly, a small amount of binder may be included in combination with a nano-sized olivine-based compound.

### Second Particle PTC2

Referring back to FIG. 10, the second particle PTC2 is in the form of a polycrystal, and includes a secondary particle in which at least two primary particles MMP are aggregated.

For example, the second particle PTC2 may have an average particle diameter ($D_{50}$) in a range of about 2 $\mu$m to about 15 $\mu$m, about 3 $\mu$m to about 10 $\mu$m, or about 3 $\mu$m to about 7 $\mu$m. For example, the second particle PTC2 may have an average particle diameter of about 5 $\mu$m. In an example embodiment, the average particle diameter may be measured through a particle size analyzer. The average particle diameter ($D_{50}$) may indicate a particle diameter when a cumulative volume is about 50 vol% in particle size distribution.

The second particle PTC2 may have a maximum particle diameter ($D_{max}$) of about 10 $\mu$m or greater, or about 15 $\mu$m or greater.

The particle diameter of the primary particles MMP may be smaller than the average particle diameter of the second particle PTC2. The primary particles MMP may have a particle diameter of about 200 nm or less. For example, the primary particles MMP may have a particle diameter in a range of about 10 nm to about 200 nm, about 20 nm to about 200 nm, about 50 nm to about 200 nm, or about 100 nm to about 200 nm. For example, the particle diameter may indicate a diameter measured by randomly selecting about 30 primary particles MMP on an electron micrograph of a positive electrode active material. The primary particles MMP may have a substantially uniform particle diameter.

When the particle diameters of the second particle PTC2 and the primary particles MMP satisfy the ranges described above, and the size of the primary particles MMP is substantially uniform, a rechargeable lithium battery containing the first particle PTC1 and the first primary particles NNP may have improved charge/discharge capacity and low-temperature capacity.

The second particle PTC2 includes an olivine-based lithium compound represented by Formula 2 below.

Formula 2: $Li_{a2}Mn_{x2}Fe_{y2}B2_{z2}PO_{4-b2}$

In Formula 2 above, $0.8 \leq a2 \leq 1.2$, $0.4 \leq x2 \leq 0.8$, $0 \leq y2 \leq 0.6$, $0 \leq z2 \leq 0.05$, $0 \leq b2 \leq 0.05$, and $x2 + y2 + z2 = 1$ is satisfied. For example, z2 may be equal to 0.002.

B2 is a dopant with which the second particle PTC2 is doped. B2 includes at least one of Al, Ti, V, and Mg. For example, B2 may include Ti. B2 may control primary particles, that is, the primary particles MMP, to be substantially uniform in size.

A doping amount of B2 may be in a range of about 500 ppm to about 3000 ppm. The doping amount of B2 may be defined as a weight of the doping element B2 with respect to a total weight of metals (i.e., Fe and B1) excluding lithium among the olivine-based lithium compounds represented by Formula 2 above. When the doping amount of B2 satisfies the range described above, the size of the primary particles MMP may be controlled to be substantially uniform.

In an example embodiment, the second particle PTC2 may include a coating layer on a surface thereof. The coating layer may entirely cover the surface of the second particle PTC2, or may partially cover the surface of the second particle PTC2. For example, the coating layer may include carbon and/or a carbon-containing compound. The second particle PTC2 may have improved structural stability and electrical conductivity through the coating layer.

The coating layer may further include at least one of a titanium-containing compound, a magnesium-containing compound, and a vanadium-containing compound. Metal-containing compounds, such as titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium.

In an example embodiment, the second particle PTC2 may further include a grain boundary coating layer on a surface of each, or at least one, of the primary particles MMP. The grain boundary coating layer may be present inside the second particle PTC2. The grain boundary coating layer may be formed to be applied along an interface between the primary particles MMP inside the second particle PTC2. That is, the grain boundary coating layer may indicate a material applied onto a grain boundary inside the second particle PTC2. The grain boundary coating layer may include carbon and/or a carbon-containing compound. The grain boundary coating layer may further include at least one of a titanium-containing compound, a magnesium-containing compound, and a vanadium-containing compound.

The inside of the second particle PTC2 described above may indicate the entire inside portion of the second particle PTC2 excluding the surface of the second particle PTC2. For example, the inside of the second particle PTC2 may indicate a region of substantially the entire inside of the second particle PTC2 from about 10 nm in depth, or a region in a range from about 10 nm to about 2 $\mu$m in depth, with respect to the surface of the second particle PTC2.

If the second particle PTC2 further includes a grain boundary coating portion, it may thus have greater structural stability and have a substantially uniform coating layer formed on the surface thereof. In addition, if the second particle PTC2 further includes a grain boundary coating portion, it may thus have further improved electrical conductivity.

The second particle PTC2 may further include carbon derived from the coating layer and/or the grain boundary coating layer described above. The second particle PTC2 may have a carbon element content in a range of about 0.5 wt% to about 10 wt%, about 1 wt% to about 3 wt%, or about 1.5 wt% to about 2.5 wt%.

The second particle PTC2 may have a large BET specific surface area. For example, the second particle PTC2 may have a BET specific surface area in a range of about 10 $m^2$/g to about 30 $m^2$/g. For example, the second particle PTC2 may have a BET specific surface area of about 20 $m^2$/g.

The second particle PTC2 may be in the shape of sphere in which nano-sized primary particles MMP are aggregated. The second particle PTC2 has the primary particles MMP closely aggregated, and may thus exhibit the following characteristics. The second particle PTC2 may be in the shape of sphere or oval. The second particle PTC2 may have an average particle diameter ($D_{50}$) in a range of about 2 $\mu$m to about 15 $\mu$m. The second particle PTC2 may have a porosity of about 20% to about 40%. Here, porosity (n) may be defined as the pore volume (Vp) divided by the total volume (Vt) of a particle, or $n = \dfrac{V_p}{V_t}$ . A Span value of the second particle PTC2, analyzed via a particle size analyzer, may be about 0.3 to about 0.75. In this specification, the span value may be defined by the equation of (D90-D10)/D50. D10, D50 and D90 may refer to the particle size of the particles with cumulative volumes of 10vol%, 50vol% and 90vol%, respectively, in the particle size distribution.

## Third Particle PTC3

Referring back to FIG. 11, the third particle PTC3 may be in the form of a single particle. Herein, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be or include a particle containing several crystals. The single particle may be in an isolated form. Alternatively, the single particle may be in the form in which about 2 to about 100 single particles are attached to one another. That is, the third particle PTC3 may be provided in various sizes. For example, the third particle PTC3 may have an average particle diameter of about 1 $\mu$m. The third particle PTC3 may have a minimum particle diameter in a range of about 20 nm to about 500 nm, or about 200 nm to about 300 nm. For example, the minimum particle diameter may indicate a diameter measured by randomly selecting about 30 primary particles on an electron micrograph of a positive electrode active material.

The third particle PTC3 may have an average particle diameter in a range of about 100 nm to about 2 $\mu$m or about 500 nm to about 2 $\mu$m. For example, the third particle PTC3 may have an average particle diameter ($D_{50}$) of about 1 $\mu$m. In an example embodiment, the average particle diameter may be measured through a particle size analyzer. The average particle diameter may indicate a particle diameter when a cumulative volume is about 50 vol% in particle size distribution.

The third particle PTC3 may include an olivine structured compound of Formula 3 below.

$$\text{Formula 3:} \qquad Li_{a3}Mn_{x3}Fe_{y3}B3_{z3}PO_{4-b3}$$

In Formula 3 above, $0.8 \leq a3 \leq 1.2$, $0.4 \leq x3 \leq 0.8$, $0 \leq y3 \leq 0.6$, $0 \leq z3 \leq 0.05$, $0 \leq b3 \leq 0.05$, and $x3 + y3 + z3 = 1$ may be satisfied. For example, z3 may be equal to 0.002.

B3 may be or include a dopant with which the third particle PTC3 is doped. B3 may include at least one of Al, Ti, V, and Mg. B3 is configured to control primary particles to be substantially uniform in size, and thus rechargeable lithium batteries may have improved charging/discharging efficiency, low-temperature properties, and lifetime characteristics.

In an example embodiment, the third particle PTC3 may include a coating layer on a surface thereof. The coating layer may substantially entirely cover the surface of the third particle PTC3, or may partially cover the surface of the third particle PTC3. For example, the coating layer may include carbon and/or a carbon-containing compound. The third particle PTC3 may have improved structural stability and electrical conductivity through the coating layer.

The coating layer may further include at least one of a titanium-containing compound, a magnesium-containing compound, and a vanadium-containing compound. Metal-containing compounds, such as titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium.

The third particle PTC3 may further include carbon derived from the coating layer described above. The carbon element content in the third particle PTC3 may be in a range of about 0.5 wt% to about 10 wt%, about 1 wt% to about 3 wt%, or about 1.5 wt% to about 2.5 wt%.

A carbon elementary analysis according to one or more embodiments of the present disclosure may be performed with an elemental analyzer (e.g., Elementar Micro Cube commercially available from Elementar Analysensysteme GmbH). A more detailed operating method and conditions may be as follows. 1 to 2 mg of a sample was weighed in a tin cup, and the sample was placed into an automatic sampling tray and fed into a combustion tube through a ball valve to be burned at a combustion temperature of 1,000 °C. Thereafter, reduced copper was used to reduce the combusted gas to form carbon dioxide. A TCD detector was utilized to detect the carbon dioxide.

In a method of measuring an amount of carbon element according to one or more embodiments of the present disclosure, a scanning electron microscope-energy dispersive X-ray spectroscopy (SEM-EDS) was performed on a particle surface, and a quantitative analysis was executed to obtain the amount of carbon element. Besides SEM-EDS, inductively coupled plasma mass spectrometry (ICP-MS) or inductively coupled plasma optical emission spectroscopy (ICP-OES) may be used to measure the amount of carbon element.

The third particle PTC3 may have a large BET specific surface area. For example, the third particle PTC3 may have a BET specific surface area in a range of about 10 $m^2$/g to about 30 $m^2$/g. For example, the third particle PTC3 may have a BET specific surface area of about 20 $m^2$/g.

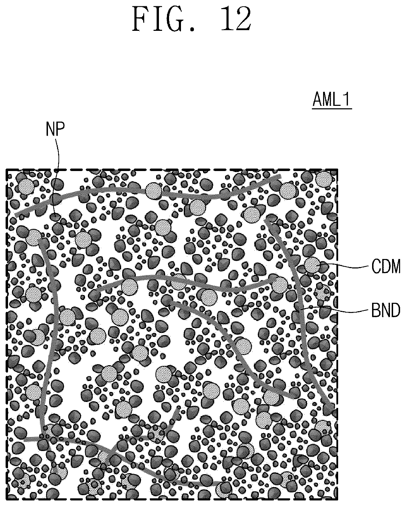

According to Comparative Examples of the present disclosure illustrated in FIG. 12, the positive electrode active material layer AML1 may only include a fine-sized positive electrode active material. The fine-sized positive electrode active material includes an olivine-based compound and may include nano-sized particles NP. For example, the olivine-based compound may be represented by a formula such as Formula 2 and/or Formula 3 above. For example, though the nano-sized particles NP agglomerate, the fine-sized positive electrode active material may not be spherical. The fine-sized positive electrode active material may have an irregular shape. The fine-sized positive electrode active material may be provided in various sizes. For example, the fine-sized positive electrode active material may have an average particle diameter in a range of about 500 nm to about 2.5 $\mu$m, or about 1 $\mu$m. The fine-sized positive electrode active material may have a minimum particle diameter of about 100 nm to about 500 nm, or about 200 nm to about 300 nm. In an example embodiment, the average particle diameter ($D_{50}$) may be measured through a particle size analyzer. The average particle diameter may indicate a particle diameter when a cumulative volume is about 50 vol% in particle size distribution. For example, the minimum particle diameter may indicate a diameter measured by randomly selecting about 30 primary particles from an electron micrograph of the fine-sized positive electrode active material. The fine-sized positive electrode active material may have a porosity greater than about 40%. A span value of the fine-sized positive electrode active material, analyzed via a particle size analyzer, may be deviated from a range from about 0.3 to about 0.75.

In an example embodiment, referring back to FIG. 10, the second active material layer ATL2 according to an example embodiment of the present disclosure includes the second particle PTC2. The second particle PTC2 is a lithium iron phosphate-based compound having an olivine structure and is highly stable and has high chemical stability. This compound has desired or improved lifetime characteristics resulting from the stable structure compared to other positive electrode materials, but has degradation in lifetime characteristics at high voltage, leading to limited use of operating voltage. The second particle PTC2 contains manganese (Mn), and may improve high voltage characteristics and energy density compared to general lithium iron phosphate-based compounds.

When the size of the particle is too small, the binding force between a current collector and a positive electrode active material is low, and accordingly, an electrode plate may be hardly processed, and a binder may be required in large quantities (see FIG. 12).

As shown in FIGS. 7 to 10, the average particle diameter of the second particle PTC2 may be similar to the average particle diameter of the first particle which is the small particle SP, or may be greater than the average particle diameter of the first particle which is the small particle SP. The first active material layer ATL1 is introduced between the current collector COL1 and the second active material layer ATL2, and the first particle PTC1 and the second particle PTC2 are mixed in an appropriate ratio, which results in an electrode plate that may have an improved binding force, and less binder BND may be required. In addition, the mixing may improve capacity, density characteristics, high temperature stability, and lifetime characteristics.

A weight ratio of the first particle PTC1 and the second particle PTC2 included in the first active material layer ATL1 and the second active material layer ATL2 may be in a range of about 10:90 to about 30:70. For example, the weight ratio of the first particle PTC1 and the second particle PTC2 included in the first active material layer ATL1 and the second active material layer ATL2 is in a range of about 15:85 to about 30:70, about 20:80 to about 30:70, or about 30:70.

When the weight ratio of the first particle PTC1 and the second particle PTC2 satisfies the ranges described above, the positive electrode active material layer AML1 may have an improved binding force with respect to the current collector COL1. Accordingly, a rechargeable lithium battery having reduced resistance may be provided. In addition, when the weight ratio of the first particle PTC1 and the second particle PTC2 satisfies any of the ranges described above, a rechargeable lithium battery having desired or improved performance may be provided.

A total doping amount of Mn may be in a range of about 0.49 to about 0.53. For example, the total doping amount of Mn may be about 0.51. Total doping amount of Mn (A+B) may be defined as the sum of a doping amount (A) of Mn contained in the first active material layer ATL1 and a doping amount (B) of Mn contained in the second active material layer ATL2. The doping amount (A) of Mn included in the first active material layer ATL1 may be defined as a product of the Mn doping amount (z1 in Formula 1) in the first particle PTC1 and the weight ratio of the first particle PTC1. The doping amount (B) of Mn included in the second active material layer ATL2 may be defined as a product of the Mn doping amount (x2 in Formula 2) in the second particle PTC2 and the weight ratio of the second particle PTC2.

When the total doping amount of Mn satisfies the ranges described above, the positive electrode active material layer AML1 may have an improved binding force with respect to the current collector COL1. Accordingly, a rechargeable lithium battery having reduced resistance may be provided. In addition, a rechargeable lithium battery having desired or improved performance may be provided.

In another example embodiment, referring back to FIG. 11, the second active material layer ATL2 according to an example embodiment of the present disclosure may include the third particle PTC3 along with the second particle PTC2. The third particle PTC3 may be or include a lithium iron phosphate-based compound having an olivine structure, which is highly stable and has high chemical stability. The lithium iron phosphate-based compound has desired or improved lifetime characteristics resulting from the stable structure compared to other positive electrode materials, but has degradation in lifetime characteristics at high voltage, leading to limited use of operating voltage. The third particle PTC3 may contain manganese (Mn), may have high voltage characteristics, and may improve energy density compared to general lithium iron phosphate-based compounds.

As shown in FIGS. 6-9 and 11, the average particle diameter of the second particle PTC2 may be similar to the average particle diameter of the first particle, which is the small particle SP, or may be greater than the average particle diameter of the first particle. The first active material layer ATL1 is introduced between the current collector COL1 and the second active material layer ATL2, and the first particle PTC1, the second particle PTC2, and the third particle PTC3 are mixed in an appropriate ratio, which results in an electrode plate that may have an improved binding force, and less binder BND may be required. In addition, the mixing may improve capacity, density characteristics, high temperature stability, and lifetime characteristics.

With respect to a total content of the first particle PTC1, the second particle PTC2, and the third particle PTC3 included in the first active material layer ATL1 and the second active material layer ATL2, the first particle PTC1 amounts to about 15 wt% to about 30 wt%. For example, with respect to a total content of the first particle PTC1, the second particle PTC2, and the third particle PTC3 included in the first active material layer ATL1 and the second active material layer ATL2, the first particle PTC1 amounts to about 20 wt% to about 30 wt%, or about 30 wt%.

With respect to a total content of the first particle PTC1, the second particle PTC2, and the third particle PTC3 included in the first active material layer ATL1 and the second active material layer ATL2, the second particle PTC2 amounts to about 30 wt% to about 40 wt%. For example, with respect to a total content of the first particle PTC1, the second particle PTC2, and the third particle PTC3 included in the first active material layer ATL1 and the second active material layer ATL2, the second particle PTC2 amounts to about 35 wt%.

With respect to a total content of the first particle PTC1, the second particle PTC2, and the third particle PTC3 included in the first active material layer ATL1 and the second active material layer ATL2, the third particle PTC3 amounts to about 30 wt% to about 40 wt%. For example, with respect to a total content of the first particle PTC1, the second particle PTC2, and the third particle PTC3 included in the first active material layer ATL1 and the second active material layer ATL2, the third particle PTC3 amounts to about 35 wt%.

When the content of the first particle PTC1, the second particle PTC2, and the third particle PTC3 satisfies the ranges described above, the positive electrode active material layer AML1 may have an improved binding force with respect to the current collector COL1. Accordingly, a rechargeable lithium battery having reduced resistance may be provided. In addition, when the content of the first particle PTC1, the second particle PTC2, and the third particle PTC3 satisfies the ranges described above, a rechargeable lithium battery having desired or improved performance may be provided.

A total doping amount of Mn may be in a range of about 0.49 to about 0.53. For example, the total doping amount of Mn may be about 0.51. Total doping amount of Mn (A+B+C) may be defined as the sum of a doping amount (A) of Mn contained in the first active material layer ATL1, a doping amount (B) of Mn contained in the second active material layer ATL2, and a doping amount (C) of Mn contained in the third active material layer ATL3. The doping amount (A) of Mn included in the first active material layer ATL1 may be defined as a product of the Mn doping amount (z1) in the first particle PTC1 and the weight ratio of the first particle PTC1. The doping amount (B) of Mn contained in the second active material layer ATL2 may be defined as the sum of a product of the Mn doping amount (x2) in the second particle PTC2 and the weight ratio of the second particle PTC2, and a product of the Mn doping amount (x3) in the third particle PTC3 and the weight ratio of the third particle PTC3.

When the total doping amount of Mn satisfies any of the ranges described above, the positive electrode active material layer AML1 may have improved binding force with respect to the current collector COL1. Accordingly, a rechargeable lithium battery having reduced resistance may be provided. In addition, a rechargeable lithium battery having desired or improved performance may be provided.

The positive electrode for a rechargeable lithium battery according to example embodiments of the present disclosure may have the following effects.

A relatively large amount of the binder BND1 may be required to attach nano-sized particles NP (see FIG. 12) having a small average particle diameter to the current collector COL1 (see FIG. 1), whereas a relatively small amount of the first binder BND1 may be required to fix the first particle PTC1 having a small BET specific surface area and a large average particle diameter onto the current collector COL1 (see FIG. 1). The positive electrode active material layer AML1 according to an example embodiment of the present disclosure includes the first particle PTC1, the second particle PTC2, and the third particle PTC3, and introduces the first active material layer ATL1 and the second active material layer ATL2, and may thus include a nano-sized olivine-based compound in large quantities and increase binding force with respect to a current collector, thereby facilitating preparation of an electrode plate and reducing resistance of an electrode plate. In addition, a rechargeable lithium battery having desired or improved capacity and lifetime characteristics, along with high operating voltage and energy density, may be provided.

Hereinafter, the present disclosure is described in more detail through Examples. However, Examples are only illustrations for describing the present disclosure, and the scope of the present disclosure is not limited to Examples below.

**Preparation Example 1: Preparation of Small Particle containing Lithium Nickel Cobalt Manganese Oxide (NCM)**

A small particle precursor was prepared using a co-precipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60:10:30 to prepare a metal raw material mixture. The metal raw material mixture, aqueous ammonia, and sodium hydroxide were added into a reactor and subjected to reactions. The slurry solution in the reactor was filtered and washed with high purity distilled water. The washed material was dried in a hot air oven at 210 °C for 24 hours to obtain a small particle precursor ($Ni_{0.6}Co_{0.1}Mn_{0.3}(OH)_2$) powder having an average particle diameter of about 4 $\mu m$.

The small particle precursor and anhydrous lithium hydroxide (LiOH) were dry mixed using a Henschel mixer. Lithium and transition metal were mixed at a molar ratio of about 1:1. The transition metal is the sum total of transition metals contained in the mid nickel-based precursor (Ni+Co+Mn). A melting agent was further added to the mixture, and the mixture was heat treated (i.e., firing process) at about 910 °C for 8 hours in an oxygen atmosphere to synthesize small particles containing lithium composite oxide. The particles were ground using a jet mill at a pressure of 3 bar.

Aluminium oxide was added to the oxide, and the mixture was subjected to a second heat treatment at 800 °C for 8 hours in an oxygen atmosphere to prepare a small particle containing NCM. The small particle containing NCM was represented by Formula of $LiNi_{0.6}Co_{0.1}Mn_{0.3}O_2$.

## Preparation Example 2: Preparation of Large Particle containing NCM

A large particle precursor was prepared using a co-precipitation method. Specifically, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60:10:30 to prepare a metal raw material mixture. A diluted solution of aqueous ammonia ($NH_4OH$) and sodium hydroxide (NaOH) as a precipitant were prepared to form a complex. Thereafter, the metal raw material mixture, aqueous ammonia, and sodium hydroxide were added into a reactor. Sodium hydroxide was added to maintain the pH of the mixture in the reactor. The mixture was subjected to reactions for about 20 hours while being stirred in the reactor. The slurry solution in the reactor was filtered and washed with high purity distilled water. The washed material was dried in a hot air oven at 750 °C for 24 hours to obtain a large particle precursor ($Ni_{0.6}Co_{0.1}Mn_{0.3}(OH)_2$) powder having a particle size of about 18 $\mu m$.

The large particle precursor and anhydrous lithium hydroxide (LiOH) were dry mixed using a Henschel mixer. Lithium and transition metal were mixed at a molar ratio of about 1:1. The transition metal is the sum total of transition metals contained in the large particle precursor (Ni+Co+Mn). The mixture was heat treated (i.e., firing process) at about 750 ° C for 15 hours in an oxygen atmosphere to synthesize large particles containing lithium composite oxide. The particles were ground using a jet mill at a pressure of 3 bar.

Aluminium oxide was added to the oxide, and the mixture was subjected to a second heat treatment at 800 °C for 8 hours in an oxygen atmosphere to prepare a large particle containing NCM. The large particle containing NCM was represented by Formula of $LiNi_{0.6}Co_{0.1}Mn_{0.3}O_2$.

## Preparation Example 3: Preparation of Bimodal NCM

The small particle containing lithium composite oxide of Preparation Example 1 and the large particle containing lithium composite oxide of Preparation Example 2 were mixed at a weight ratio of 70:30 to prepare a bimodal particle.

## Preparation Example 4: Preparation of Lithium Manganese Iron Phosphate (LMFP) Particle in the form of Secondary Particle

A manganese iron phosphate precursor ($Mn_{0.6}Fe_{0.4}PO_4$), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain an olivine-based compound particle in the form of a secondary particle. The olivine-based compound particle was approximately represented by the Formula $LiMn_{0.6}Fe_{0.4}PO_4$.

## Preparation Example 5: Preparation of LMFP Particle in the form of Single Particle

A manganese iron phosphate precursor ($Mn_{0.6}Fe_{0.4}PO_4$), lithium carbonate, magnesium dioxide, and titanium dioxide were added to water at a molar ratio of (Mn+Fe):Li:Mg:Ti of 1:1.03:0.01:0.004. 10 wt% of glucose was further added to the mixture. The mixture was subjected to a wet grinding process through ball milling. The mixture was evaporated to dryness on a heating tray, and then placed and dried in a vacuum oven at 85 °C for 4 hours. The dried mixture was fired at 650 °C for 10 hours in a nitrogen atmosphere. The fired product was ground at a rotation speed of 8000 rpm to obtain an olivine-based compound particle in the form of a single particle. The olivine-based compound particle was approximately represented by the Formula $LiMn_{0.6}Fe_{0.4}PO_4$.

## Example 1: Preparation of Positive Electrode Including First Active Material Layer and Second Active Material Layer

The small particle containing NCM, the first binder (polyvinylidene fluoride), and the first conductive material (carbon black) were dispersed in N-methylpyrrolidone at a weight ratio of 0.976:0.012:0.012 to prepare a first active material slurry.

The LMFP particle in the form of a secondary particle, a second binder (polyvinylidene fluoride), and a second conductive material (carbon black) were dispersed in N-methylpyrrolidone at a weight ratio of 0.97:0.015:0.015 to prepare a second active material slurry.

The first active material slurry was applied onto a 15 μm thick aluminium (Al) thin film, which is a current collector, and dried to form a first active material layer. The second active material slurry was applied onto the first active material layer and dried to form a second active material layer. The first active material layer and the second active material layer were formed such that the small particle containing NCM in the first active material layer, and the LMFP particle in the form of a secondary particle in the second active material layer were at a weight ratio of 30:70. Through a roll press, a positive electrode in which the aluminium current collector, the first active material layer, and the second active material layer were stacked in this order was prepared. A thickness ratio of the first active material layer and the second active material layer was 3:7.

**Example 2: Preparation of Positive Electrode Including First Active Material Layer and Second Active Material Layer**

A positive electrode was prepared in the same manner as in Example 1, with a difference that the LMFP particle in the form of a secondary particle, the LMFP particle in the form of a single particle, the second binder (polyvinylidene fluoride), and the second conductive material (carbon black) were dispersed in N-methylpyrrolidone at a weight ratio of 0.48:0.48:0.02:0.02 to prepare a second active material slurry.

**Example 3: Preparation of Positive Electrode Including First Active Material Layer and Second Active Material Layer**

A positive electrode was prepared in the same manner as in Example 1, with a difference that the large particle containing NCM, the first binder (polyvinylidene fluoride), and the first conductive material (carbon black) were dispersed in N-methylpyrrolidone at a weight ratio of 0.976:0.012:0.012 to prepare a first active material slurry.

**Example 4: Preparation of Positive Electrode Including First Active Material Layer and Second Active Material Layer**

A positive electrode was prepared in the same manner as in Example 1, with a difference that the large particle containing NCM, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a secondary particle, the LMFP particle in the form of a single particle, the second binder (polyvinylidene fluoride), and the second conductive material (carbon black) were dispersed in N-methylpyrrolidone at a weight ratio of 0.48:0.48:0.02:0.02 to prepare a second active material slurry.

**Example 5: Preparation of Positive Electrode Including First Active Material Layer and Second Active Material Layer**

A positive electrode was prepared in the same manner as in Example 1, with a difference that the bimodal NCM, the first binder (polyvinylidene fluoride), and the first conductive material (carbon black) were dispersed in N-methylpyrrolidone at a weight ratio of 0.976:0.012:0.012 to prepare a first active material slurry.

**Example 6: Preparation of Positive Electrode Including First Active Material Layer and Second Active Material Layer**

A positive electrode was prepared in the same manner as in Example 1, with a difference that the bimodal NCM, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a secondary particle, the LMFP particle in the form of a single particle, the second binder (polyvinylidene fluoride), and the second conductive material (carbon black) were dispersed in N-methylpyrrolidone at a weight ratio of 0.48:0.48:0.02:0.02 to prepare a second active material slurry.

**Comparative Example 1: Preparation of Positive Electrode Including One Active Material Layer**

The small particle containing NCM, the first binder (polyvinylidene fluoride), and the first conductive material (carbon black) were dispersed in N-methylpyrrolidone at a weight ratio of 0.976:0.012:0.012 to prepare a first active material slurry. The first active material slurry was applied onto a 15 $\mu$m thick aluminium (Al) thin film, which is a current collector, and dried to form a first active material layer. Through a roll press, a positive electrode in which the aluminium current collector and the first active material layer were stacked in this order was prepared.

**Comparative Example 2: Preparation of Positive Electrode Including One Active Material Layer**

A positive electrode was prepared in the same manner as in Comparative Example 1, with a difference that the LMFP particle in the form of a single particle, the first binder (polyvinylidene fluoride), and the first conductive material (carbon black) were dispersed in N-methylpyrrolidone at a weight ratio of 0.94:0.03:0.03 to prepare a first active material slurry.

**Comparative Example 3: Preparation of Positive Electrode Including One Active Material Layer**

A positive electrode was prepared in the same manner as in Comparative Example 1, with a difference that the LMFP particle in the form of a secondary particle, the first binder (polyvinylidene fluoride), and the first conductive material (carbon black) were dispersed in N-methylpyrrolidone at a weight ratio of 0.97:0.015:0.015 to prepare a first active material slurry.

**Comparative Example 4: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 70:30, and the mixture was dispersed in N-methylpyrrolidone along with the first binder (polyvinylidene fluoride) and the first conductive material (carbon black) to prepare a first active material slurry.

**Comparative Example 5: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 60:40, and the mixture was dispersed in N-methylpyrrolidone along with the first binder (polyvinylidene fluoride) and the first conductive material (carbon black) to prepare a first active material slurry.

**Comparative Example 6: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 50:50, and the mixture was dispersed in N-methylpyrrolidone along with the first binder (polyvinylidene fluoride) and the first conductive material (carbon black) to prepare a first active material slurry.

**Comparative Example 7: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 40:60, and the mixture was dispersed in N-methylpyrrolidone along with the first binder (polyvinylidene fluoride) and the first conductive material (carbon black) to prepare a first active material slurry.

**Comparative Example 8: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 30:70, and the mixture was dispersed in N-methylpyrrolidone along with the first binder (polyvinylidene fluoride) and the first conductive material (carbon black) to prepare a first active material slurry.

**Comparative Example 9: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 20:80, and the mixture was dispersed in N-methylpyrrolidone along with the first binder (polyvinylidene fluoride) and the first conductive material (carbon black) to prepare a first active material slurry.

**Comparative Example 10: Preparation of Positive Electrode Including One Active Material Layer**

A positive electrode was prepared in the same manner as in Comparative Example 1, with a difference that the small particle containing NCM and the LMFP particle in the form of a secondary particle were mixed to be present at a weight ratio of 10:90, and the mixture was dispersed in N-methylpyrrolidone along with the first binder (polyvinylidene fluoride) and the first conductive material (carbon black) to prepare a first active material slurry.

**Comparative Example 11: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 70:30, and the mixture was dispersed in N-methylpyrrolidone along with the first binder (polyvinylidene fluoride) and the first conductive material (carbon black) to prepare a first active material slurry.

**Comparative Example 12: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 60:40, and the mixture was dispersed in N-methylpyrrolidone along with the first binder (polyvinylidene fluoride) and the first conductive material (carbon black) to prepare a first active material slurry.

**Comparative Example 13: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 50:50, and the mixture was dispersed in N-methylpyrrolidone along with the first binder (polyvinylidene fluoride) and the first conductive material (carbon black) to prepare a first active material slurry.

**Comparative Example 14: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 40:60, and the mixture was dispersed in N-methylpyrrolidone along with the first binder (polyvinylidene fluoride) and the first conductive material (carbon black) to prepare a first active material slurry.

**Comparative Example 15: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 30:70, and the mixture was dispersed in N-methylpyrrolidone along with the first binder (polyvinylidene fluoride) and the first conductive material (carbon black) to prepare a first active material slurry.

**Comparative Example 16: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 20:80, and the mixture was dispersed in N-methylpyrrolidone along with the first binder (polyvinylidene fluoride) and the first conductive material (carbon black) to prepare a first active material slurry.

**Comparative Example 17: Preparation of Positive Electrode Including One Active Material Layer**

A positive electrode was prepared in the same manner as in Comparative Example 1, with a difference that the small particle containing NCM and the LMFP particle in the form of a single particle were mixed to be present at a weight ratio of 10:90, and the mixture was dispersed in N-methylpyrrolidone along with the first binder (polyvinylidene fluoride) and the first conductive material (carbon black) to prepare a first active material slurry.

**Comparative Example 18: Preparation of Positive Electrode Including One Active Material Layer**

A positive electrode was prepared in the same manner as in Comparative Example 1, with a difference that the small particle containing NCM, the LMFP particle in the form of a single particle, and the LMFP particle in the form of a secondary particle were mixed to be present at a weight ratio of 30:35:35, and the mixture was dispersed in N-methylpyrrolidone along with the first binder (polyvinylidene fluoride) and the first conductive material (carbon black) to prepare a first active material slurry.

**Comparative Example 19: Preparation of Positive Electrode Including One Active Material Layer**

A positive electrode was prepared in the same manner as in Comparative Example 1, with a difference that the large particle containing NCM, the first binder (polyvinylidene fluoride), and the first conductive material (carbon black) were dispersed in N-methylpyrrolidone at a weight ratio of 0.976:0.012:0.012 to prepare a first active material slurry.

**Comparative Example 20: Preparation of Positive Electrode Including One Active Material Layer**

A positive electrode was prepared in the same manner as in Comparative Example 1, with a difference that the large particle containing NCM and the LMFP particle in the form of a secondary particle were mixed to be present at a weight ratio of 30:70, and the mixture was dispersed in N-methylpyrrolidone along with the first binder (polyvinylidene fluoride) and the first conductive material (carbon black) to prepare a first active material slurry.

**Comparative Example 21: Preparation of Positive Electrode Including One Active Material Layer**

A positive electrode was prepared in the same manner as in Comparative Example 1, with a difference that the large particle containing NCM, the LMFP particle in the form of a single particle, and the LMFP particle in the form of a secondary particle were mixed to be present at a weight ratio of 30:35:35, and the mixture was dispersed in N-methylpyrrolidone along with the first binder (polyvinylidene fluoride) and the first conductive material (carbon black) to prepare a first active material slurry.

**Comparative Example 22: Preparation of Positive Electrode Including One Active Material Layer**

A positive electrode was prepared in the same manner as in Comparative Example 1, with a difference that the bimodal NCM, the first binder (polyvinylidene fluoride), and the first conductive material (carbon black) were dispersed in N-methylpyrrolidone at a weight ratio of 1:0.05:0.02 to prepare a first active material slurry.

**Comparative Example 23: Preparation of Positive Electrode Including One Active Material Layer**

A positive electrode was prepared in the same manner as in Comparative Example 1, with a difference that the bimodal NCM and the LMFP particle in the form of a secondary particle were mixed to be present at a weight ratio of 30:70, and the mixture was dispersed in N-methylpyrrolidone along with the first binder (polyvinylidene fluoride) and the first conductive material (carbon black) to prepare a first active material slurry.

**Comparative Example 24: Preparation of Positive Electrode Including One Active Material Layer**

A positive electrode was prepared in the same manner as in Comparative Example 1, with a difference that the bimodal NCM, the LMFP particle in the form of a single particle, and the LMFP particle in the form of a secondary particle were mixed to be present at a weight ratio of 30:35:35, and the mixture was dispersed in N-methylpyrrolidone along with the first binder (polyvinylidene fluoride) and the first conductive material (carbon black) to prepare a first active material slurry.

**Comparative Example 25: Preparation of Positive Electrode Including First Active Material Layer and Second Active Material Layer**

A positive electrode with FAD2/FAD1=0.83 was prepared.

A positive electrode was prepared in the same manner as in Example 1, with a difference that the small particle containing NCM, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a secondary particle, the second binder (polyvinylidene fluoride), and the second conductive material (carbon black) were dispersed in N-methylpyrrolidone at a weight ratio of 0.98:0.01:0.01 to prepare a second active material slurry.

**Comparative Example 26: Preparation of Positive Electrode Including First Active Material Layer and Second Active Material Layer**

A positive electrode with FAD2/FAD1=2.50 was prepared.

A positive electrode was prepared in the same manner as in Example 1, with a difference that the small particle containing NCM, the first binder (polyvinylidene fluoride), and the first conductive material (carbon black) were dispersed in N-methylpyrrolidone at a weight ratio of 0.976:0.012:0.012 to prepare a first active material slurry, and the LMFP particle in the form of a secondary particle, the second binder (polyvinylidene fluoride), and the second conductive material (carbon black) were dispersed in N-methylpyrrolidone at a weight ratio of 0.94:0.03:0.03 to prepare a second active material slurry.

**Preparation of Rechargeable Lithium Battery**

A 2032 type coin half cell was prepared using the prepared positive electrode and a lithium metal electrode as a counter electrode. A separator (thickness: about 16 $\mu$m) formed a porous polyethylene (PE) film was placed between the positive electrode and the lithium metal counter electrode, and an electrolyte solution was injected to prepare a rechargeable lithium battery. As an electrolyte, an electrolyte solution obtained by mixing 1.3 M $LiPF_6$ with a mixed solvent containing ethylene carbonate (EC), ethylmethyl carbonate (EMC), and dimethyl carbonate (DMC) in a volume ratio of 3:4:3 was used.

The details of Examples 1 to 6 and Comparative Examples 1 to 26 are illustrated in Table 1 and Table 2. Referring to Table 1 and 2, Examples 1 to 6 comprise the NCM particle and the LMFP particle, and have a double layer structure. On the other hand, Comparative Examples 1 to 24 comprise the NCM particle and the LMFP particle, but have a single layer structure. Comparative Examples 25 and 26 differ from Example 1 only in a weight ratio of FAD2/FAD1.

Table 1:

| Item | Electrode plate structure | Mn doping content when mixed | Content of particle (wt%) | | |
| --- | --- | --- | --- | --- | --- |
| | | | NCM particle (Form/wt%) | LMFP particle in single particle form | LMFP particle in secondary particle form (wt%) |
| Example 1 | Double layer | 0.51 | Small particle/30 | - | 70 |
| Example 2 | Double layer | 0.51 | Small particle/30 | 35 | 35 |
| Example 3 | Double layer | 0.51 | Large particle/30 | - | 70 |
| Example 4 | Double layer | 0.51 | Large particle/30 | 35 | 35 |
| Example 5 | Double layer | 0.51 | Bimodal/30 | - | 70 |
| Example 6 | Double layer | 0.51 | Bimodal/30 | 35 | 35 |
| Comparative Example 1 | Single layer | | Small particle/100 | | |
| Comparative Example 2 | Single layer | - | - | 100 | - |
| Comparative Example 3 | Single layer | - | - | - | 100 |
| Comparative Example 4 | Single layer | 0.39 | Small particle/70 | - | 30 |
| Comparative Example 5 | Single layer | 0.42 | Small particle/60 | - | 40 |
| Comparative Example 6 | Single layer | 0.45 | Small particle/50 | - | 50 |
| Comparative Example 7 | Single layer | 0.48 | Small particle/40 | - | 60 |

(continued)

| Item | Electrode plate structure | Mn doping content when mixed | Content of particle (wt%) | | |
|---|---|---|---|---|---|
| | | | NCM particle (Form/wt%) | LMFP particle in single particle form | LMFP particle in secondary particle form (wt%) |
| Comparative Example 8 | Single layer | 0.51 | Small particle/30 | - | 70 |
| Comparative Example 9 | Single layer | 0.54 | Small particle/20 | - | 80 |
| Comparative Example 10 | Single layer | 0.57 | Small particle/10 | - | 90 |
| Comparative Example 11 | Single layer | 0.39 | Small particle/70 | 30 | - |
| Comparative Example 12 | Single layer | 0.42 | Small particle/60 | 40 | - |
| Comparative Example 13 | Single layer | 0.45 | Small particle/50 | 50 | - |
| Comparative Example 14 | Single layer | 0.48 | Small particle/40 | 60 | - |
| Comparative Example 15 | Single layer | 0.51 | Small particle/30 | 70 | - |
| Comparative Example 16 | Single layer | 0.54 | Small particle/20 | 80 | - |
| Comparative Example 17 | Single layer | 0.57 | Small particle/10 | 90 | - |
| Comparative Example 18 | Single layer | 0.51 | Small particle/30 | 35 | 35 |
| Comparative Example 19 | Single layer | - | Large particle/100 | - | - |
| Comparative Example 20 | Single layer | 0.51 | Large particle/30 | - | 70 |
| Comparative Example 21 | Single layer | 0.51 | Large particle/30 | 35 | 35 |
| Comparative Example 22 | Single layer | - | Bimodal/100 | - | - |
| Comparative Example 23 | Single layer | 0.51 | Bimodal/30 | - | 70 |
| Comparative Example 24 | Single layer | 0.51 | Bimodal/30 | 35 | 35 |
| Comparative Example 25 | Double layer | 0.51 | Small particle/30 | - | 70 |
| Comparative Example 26 | Double layer | 0.51 | Small particle/30 | - | 70 |

Table 2:

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD1 |
|---|---|---|---|---|---|
| | First binder | First conductive material | Second binder | Second conductive material | |
| Example 1 | 1.2 | 1.2 | 1.5 | 1.5 | 1.25 |
| Example 2 | 1.2 | 1.2 | 2 | 2 | 1.67 |
| Example 3 | 1.2 | 1.2 | 1.5 | 1.5 | 1.25 |
| Example 4 | 1.2 | 1.2 | 2 | 2 | 1.67 |
| Example 5 | 1.2 | 1.2 | 1.5 | 1.5 | 1.25 |
| Example 6 | 1.2 | 1.2 | 2 | 2 | 1.67 |
| Comparative Example 1 | 1.2 | 1.2 | - | - | - |
| Comparative Example 2 | 3 | 3 | - | - | - |
| Comparative Example 3 | 1.5 | 1.5 | - | - | - |

(continued)

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD1 |
|---|---|---|---|---|---|
| | First binder | First conductive material | Second binder | Second conductive material | |
| Comparative Example 4 | 1.2 | 1.2 | - | - | - |
| Comparative Example 5 | 1.2 | 1.2 | - | - | - |
| Comparative Example 6 | 1.2 | 1.2 | - | - | - |
| Comparative Example 7 | 1.2 | 1.2 | - | - | - |
| Comparative Example 8 | 1.2 | 1.2 | - | - | - |
| Comparative Example 9 | 1.2 | 1.2 | - | - | - |
| Comparative Example 10 | 1.2 | 1.2 | - | - | - |
| Comparative Example 11 | 2 | 2 | - | - | - |
| Comparative Example 12 | 2 | 2 | - | - | - |
| Comparative Example 13 | 2 | 2 | - | - | - |
| Comparative Example 14 | 2 | 2 | - | - | - |
| Comparative Example 15 | 2 | 2 | - | - | - |
| Comparative Example 16 | 2 | 2 | - | - | - |
| Comparative Example 17 | 2 | 2 | - | - | - |
| Comparative Example 18 | 1.2 | 1.2 | - | - | - |
| Comparative Example 19 | 1.2 | 1.2 | - | - | - |
| Comparative Example 20 | 1.2 | 1.2 | - | - | - |
| Comparative Example 21 | 1.2 | 1.2 | - | - | - |
| Comparative Example 22 | 1.2 | 1.2 | - | - | - |
| Comparative Example 23 | 1.2 | 1.2 | - | - | - |

(continued)

| Item | Content of first functional additive FAD1 in first active material layer (parts by weight/100 parts by weight of first active material layer) | | Content of second functional additive FAD2 in second active material layer (parts by weight/100 parts by weight of second active material layer) | | Weight ratio of FAD2/FAD 1 |
|---|---|---|---|---|---|
| | First binder | First conductive material | Second binder | Second conductive material | |
| Comparative Example 24 | 1.2 | 1.2 | - | - | - |
| Comparative Example 25 | 1.2 | 1.2 | 1 | 1 | 0.83 |
| Comparative Example 26 | 1.2 | 1.2 | 3 | 3 | 2.50 |

### Evaluation Example 1: Analysis of Positive Electrode Active Material Surface

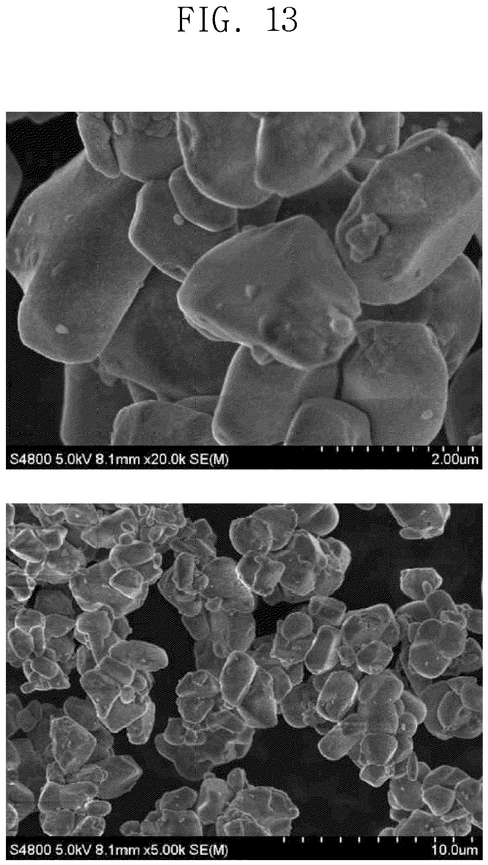

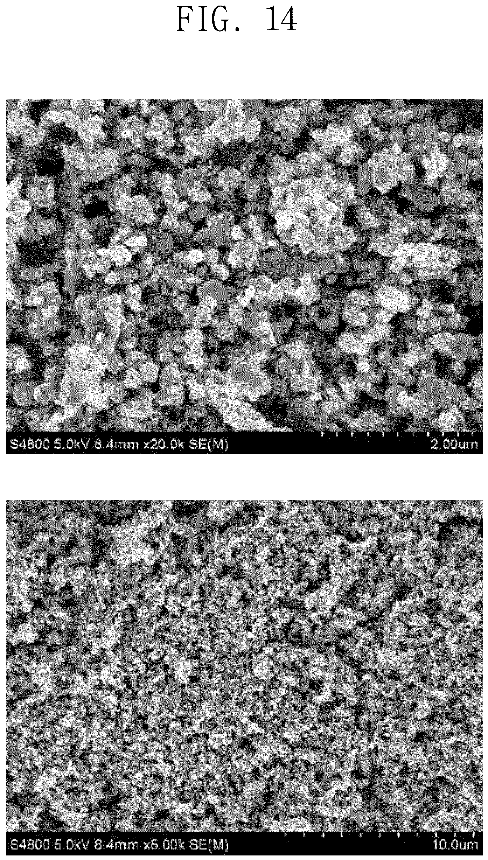

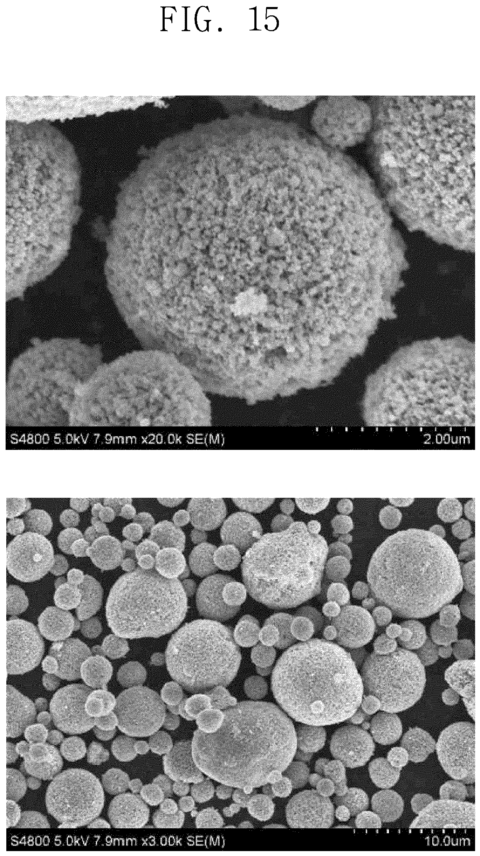

SEM images for each of the first particle and the second particle prepared in Preparation Examples 1, 4, and 5 are shown in FIGS. 13 to 15. Referring to FIG. 13, the first particle according to Preparation Example 1 of the present disclosure is in the form of a micro-sized single particle. Referring to FIG. 16, the third particle according to Preparation Example 5 of the present disclosure is in the form of a nano-sized fine single particle. Referring to FIG. 17, the second particle according to Preparation Example 4 is in the form of a spherical secondary particle in which a plurality of primary particles are aggregated.

### Evaluation Example 2: Evaluation of Active Material

Pellet density (PD) of the positive electrode active materials of Examples and Comparative Examples was measured, and the results are shown in Table 3. The pellet density was measured and recorded within the range of 3.0000 g (with an error margin of $\pm$ 0.0004 g) for the positive electrode active material. The positive electrode active material was pressed using a 13 mm KBr Pellet Die at 4 tons of pressure for 30 seconds, after which the height reduction was measured and the weight per volume was determined.

Table 3:

| Item | Pellet density (g/cc) |
|---|---|
| Example 1 | 2.56 |
| Example 2 | 2.58 |
| Example 3 | 2.58 |
| Example 4 | 2.61 |
| Example 5 | 2.59 |
| Example 6 | 2.62 |
| Comparative Example 1 | 3.10 |
| Comparative Example 2 | 2.35 |
| Comparative Example 3 | 2.41 |
| Comparative Example 4 | 2.89 |
| Comparative Example 5 | 2.82 |
| Comparative Example 6 | 2.76 |
| Comparative Example 7 | 2.69 |
| Comparative Example 8 | 2.62 |
| Comparative Example 9 | 2.55 |

(continued)

| Item | Pellet density (g/cc) |
|---|---|
| Comparative Example 10 | 2.48 |
| Comparative Example 11 | 2.88 |
| Comparative Example 12 | 2.80 |
| Comparative Example 13 | 2.73 |
| Comparative Example 14 | 2.65 |
| Comparative Example 15 | 2.58 |
| Comparative Example 16 | 2.50 |
| Comparative Example 17 | 2.43 |
| Comparative Example 18 | 2.60 |
| Comparative Example 19 | 3.10 |
| Comparative Example 20 | 2.62 |
| Comparative Example 21 | 2.65 |
| Comparative Example 22 | 3.75 |
| Comparative Example 23 | 2.81 |
| Comparative Example 24 | 2.75 |
| Comparative Example 25 | 2.59 |
| Comparative Example 26 | 2.53 |

### Evaluation Example 3: Evaluation of Resistance and Binding Force

Characteristics of rechargeable lithium batteries prepared using positive electrode active materials each from Examples and Comparative Examples were evaluated.

For initial charging/discharging, the rechargeable lithium batteries were initially charged at a constant current of 0.2 C and a constant voltage (4.45 V) (cut-off 0.05C) at 25°C, and after 10 minutes of rest, discharged up to 3.0 V at a constant current of 0.2 C, so as to obtain the initial charge capacity at 0.2 C and the initial discharge capacity at 0.2 C. The efficiency at 0.2 C (%) is expressed as the initial discharge capacity at 0.2 C / initial charge capacity at 0.2 C.. The rechargeable lithium batteries were charged to SOC50 at a constant current of 0.2 C, and then rested for 1 hour at SOC50. After that, the rechargeable lithium batteries were discharged at 1.0 C for 10 seconds, followed by another 10-second rest. At this point, the difference between the voltage after the discharge and the voltage after the 10-second rest was divided by the current to calculate the cell resistance (DC-IR). The results are shown in Table 4 below.

Table 4:

| Item | Charge amount at 0.2 C (mAh/g) | Discharge amount at 0.2 C (mAh/g) | Efficiency at 0.2 C (%) | DCIR, SOC50 ($\Omega$, 0.2 C/1.0 C) |
|---|---|---|---|---|
| Example 1 | 176.5 | 162.5 | 92.1 | 16.7 |
| Example 2 | 176.3 | 162.1 | 91.9 | 17.8 |
| Example 3 | 176.5 | 162.5 | 92.07 | 17.2 |
| Example 4 | 176.3 | 162.1 | 91.95 | 18.3 |
| Example 5 | 176.4 | 162.4 | 92.06 | 17.0 |
| Example 6 | 176.5 | 162.3 | 91.95 | 18.1 |
| Comparative Example 1 | 221.3 | 196.3 | 88.7 | 5.5 |
| Comparative Example 2 | 155.0 | 145.0 | 93.5 | 43.0 |
| Comparative Example 3 | 156.2 | 148.1 | 94.8 | 37.2 |

(continued)

| Item | Charge amount at 0.2 C (mAh/g) | Discharge amount at 0.2 C (mAh/g) | Efficiency at 0.2 C (%) | DCIR, SOC50 ($\Omega$, 0.2 C/1.0 C) |
|---|---|---|---|---|
| Comparative Example 4 | 201.8 | 181.8 | 90.1 | 15.0 |
| Comparative Example 5 | 195.3 | 177.0 | 90.7 | 18.2 |
| Comparative Example 6 | 188.8 | 172.2 | 91.2 | 21.4 |
| Comparative Example 7 | 182.2 | 167.4 | 91.8 | 24.5 |
| Comparative Example 8 | 175.7 | 162.6 | 92.5 | 27.7 |
| Comparative Example 9 | 169.2 | 157.7 | 93.2 | 30.9 |
| Comparative Example 10 | 162.7 | 152.9 | 94.0 | 34.0 |
| Comparative Example 11 | 201.4 | 180.9 | 89.8 | 16.8 |
| Comparative Example 12 | 194.8 | 175.8 | 90.2 | 20.5 |
| Comparative Example 13 | 188.2 | 170.7 | 90.7 | 24.3 |
| Comparative Example 14 | 181.5 | 165.5 | 91.2 | 28.0 |
| Comparative Example 15 | 174.9 | 160.4 | 91.7 | 31.8 |
| Comparative Example 16 | 168.3 | 155.3 | 92.3 | 35.5 |
| Comparative Example 17 | 161.6 | 150.1 | 92.9 | 39.3 |
| Comparative Example 18 | 175.3 | 161.5 | 92.1 | 29.7 |
| Comparative Example 19 | 220.3 | 195.2 | 88.6 | 7.8 |
| Comparative Example 20 | 175.7 | 162.6 | 92.5 | 27.7 |
| Comparative Example 21 | 174.9 | 161.3 | 92.2 | 30.2 |
| Comparative Example 22 | 221.3 | 196.2 | 88.7 | 7.0 |
| Comparative Example 23 | 175.6 | 162.4 | 92.5 | 28.1 |
| Comparative Example 24 | 175.1 | 160.3 | 91.6 | 33 |
| Comparative Example 25 | 178.3 | 164.1 | 92.1 | 15.2 |
| Comparative Example 26 | 172.6 | 158.7 | 92.0 | 20.6 |

Referring to Table 4, the rechargeable lithium batteries including the positive electrodes according to Examples 1 to 6 have a similar level of discharge amount and resistance to Comparative Examples 2, 3, 15, 20, 21, 23, and 24, or have a higher discharge amount and lower resistance than Comparative Examples 2, 3, 15, 20, 21, 23, and 24. Accordingly, the positive electrode containing the olivine-based compound may have greater binding force with the introduction of the first active material layer containing the first particle.

## Evaluation Example 4: Evaluation of Battery Properties

Characteristics of rechargeable lithium batteries prepared using positive electrode active materials each from Examples and Comparative Examples were evaluated.

For initial charging/discharging, the rechargeable lithium batteries were initially charged at a constant current of 0.2 C and a constant voltage (4.45 V) (cut-off 0.05C) at 25°C, and after 10 minutes of rest, discharged up to 3.0 V at a constant current of 0.2 C, and then the average voltage and energy density were evaluated. The average voltage was obtained by integrating an area under a discharge voltage curve (a-voltage-capacity graph) after the initial charging and discharging of the cells and then dividing the integral by discharge capacity. The energy density was obtained by using a calculation equation of {average driving voltage (V) x capacity (Ah)/cell weight (kg)}, wherein the capacity was calculated by multiplying a positive electrode weight (g) and discharge capacity (mAh/g). Thereafter, the charging/discharging was repeated 50 times at 45 °C and 1.0 C/1.0 C, the lifetime (%, @ 50ccl) is expressed as the discharge capacity after the 50th cycle / initial discharge capacity. Coin cells were additionally prepared, and then the batteries were initially charged at a constant current of 0.2 C and a constant voltage (4.45 V) (cut-off 0.05 C), and after 10 minutes of rest, discharged up to 3.0 V at a constant current of 0.2 C and additionally charged, and then measured at -20 °C for discharge capacity. The results of evaluating the battery properties are shown in Table 5 below.

Table 5:

| Item | Capacity at -20 °C (mAh/g) | Average voltage | Lifetime at 1 C (%, @50ccl) | Energy density (Wh/kg) |
|---|---|---|---|---|
| Example 1 | 85 | 3.63 | 100.0 | 586 |
| Example 2 | 83 | 3.62 | 99.9 | 584 |
| Example 3 | 87 | 3.63 | 100 | 586 |
| Example 4 | 85 | 3.62 | 99.8 | 584 |
| Example 5 | 86.0 | 3.63 | 100.0 | 586 |
| Example 6 | 84.0 | 3.62 | 99.9 | 585 |
| Comparative Example 1 | 65 | 3.65 | 98.4 | 636 |
| Comparative Example 2 | 96 | 3.60 | 99.1 | 478 |
| Comparative Example 3 | 126 | 3.60 | 99.8 | 488 |
| Comparative Example 4 | 83 | 3.64 | 98.8 | 661 |
| Comparative Example 5 | 89 | 3.63 | 99.0 | 643 |
| Comparative Example 6 | 96 | 3.63 | 99.1 | 624 |
| Comparative Example 7 | 102 | 3.62 | 99.2 | 606 |
| Comparative Example 8 | 108 | 3.62 | 99.4 | 581 |
| Comparative Example 9 | 114 | 3.61 | 99.5 | 559 |
| Comparative Example 10 | 120 | 3.61 | 99.7 | 537 |
| Comparative Example 11 | 74 | 3.64 | 98.6 | 658 |
| Comparative Example 12 | 77 | 3.63 | 98.7 | 638 |
| Comparative Example 13 | 81 | 3.63 | 98.8 | 619 |
| Comparative Example 14 | 84 | 3.62 | 98.8 | 599 |
| Comparative Example 15 | 87 | 3.62 | 98.9 | 578 |
| Comparative Example 16 | 90 | 3.61 | 99.0 | 556 |
| Comparative Example 17 | 93 | 3.61 | 99.0 | 533 |
| Comparative Example 18 | 97 | 3.62 | 99.1 | 580 |
| Comparative Example 19 | 70 | 3.65 | 99.1 | 712 |
| Comparative Example 20 | 107.7 | 3.6 | 99.4 | 581 |
| Comparative Example 21 | 98 | 3.615 | 99.4 | 579 |
| Comparative Example 22 | 65 | 3.65 | 99.2 | 716 |
| Comparative Example 23 | 106.2 | 3.62 | 99.4 | 581 |
| Comparative Example 24 | 86.1 | 3.615 | 99.2 | 579 |
| Comparative Example 25 | 82.6 | 3.63 | 98.2 | 592 |
| Comparative Example 26 | 89.2 | 3.63 | 96.8 | 573 |

Referring to Tables 4 and 5, the rechargeable lithium batteries including the positive electrodes according to Examples 1 to 6 have desired or improved capacity and lifetime characteristics along with high operating voltage and energy density.

A positive electrode for a rechargeable lithium battery according to the present invention contains a nano-sized olivine-based compound in large quantities, which increases binding force with respect to a current collector, and may thus facilitate preparation of an electrode plate and reduce the resistance of an electrode plate.

A rechargeable lithium battery according to the present invention may have desired or improved capacity and lifetime characteristics along with high operating voltage and energy density.

Although the example embodiments of the present disclosure have been described above with reference to the accompanying drawings, the present disclosure may be applied in other specific forms without changing the technical idea or essential features thereof. Therefore, it should be understood that the example embodiments described above are presented as examples in all respects and not restrictive.

**Claims**

1. A positive electrode for a rechargeable lithium battery, the positive electrode comprising:

   a current collector;
   a first active material layer on the current collector, the first active material layer including a first particle, a first binder, and a first conductive material; and
   a second active material layer on the first active material layer, the second active material layer including a second particle, a second binder, and a second conductive material,
   wherein the first particle contains a layered compound of Formula 1 below,
   the second particle contains an olivine structured compound of Formula 2 below,
   the second particle is in the form of a secondary particle constituted with a plurality of primary particles,
   the first binder and the first conductive material constitute a first functional additive,
   the second binder and the second conductive material constitute a second functional additive, and
   a weight ratio of the first functional additive in the first active material layer is lower than a weight ratio of the second functional additive in the second active material layer,

   $$\text{Formula 1:} \qquad Li_{a1}Ni_{x1}Co_{y1}Mn_{z1}B1_{c1}O_{2-b1}$$

   wherein in Formula 1 above, $0.8 \leq a1 \leq 1.2$, $0.5 \leq x1 \leq 0.8$, $0 \leq y1 \leq 0.3$, $0.1 \leq z1 \leq 0.5$, $0 \leq c1 \leq 0.1$, $0 < b1 < 0.05$, and $x1 + y1 + z1 + c1 = 1$ are satisfied, and
   B1 includes at least one of Ti, Mg, V, Nb, and Al, and

   $$\text{Formula 2:} \qquad Li_{a2}Mn_{x2}Fe_{y2}B2_{z2}PO_{4-b2}$$

   wherein in Formula 2 above, $0.8 \leq a2 \leq 1.2$, $0.4 \leq x2 \leq 0.8$, $0 \leq y2 \leq 0.6$, $0 \leq z2 \leq 0.05$, $0 \leq b2 \leq 0.05$, and $x2 + y2 + z2 = 1$ are satisfied, and
   B2 includes at least one of Al, Ti, V, and Mg.

2. The positive electrode for a rechargeable lithium battery of claim 1, wherein a ratio of the weight ratio of the second functional additive to the weight ratio of the first functional additive is in a range of about 1.1 to about 2.14.

3. The positive electrode for a rechargeable lithium battery of claim 1 or claim 2, wherein the content of the first binder is in a range of about 1.2 parts by weight to about 2 parts by weight with respect to 100 parts by weight of the first active material layer, and
   the content of the second binder is in a range of about 1.5 parts by weight to about 2.5 parts by weight with respect to 100 parts by weight of the second active material layer.

4. The positive electrode for a rechargeable lithium battery of any preceding claim, wherein the content of the first conductive material is in a range of about 1.2 parts by weight to about 2 parts by weight with respect to 100 parts by weight of the first active material layer, and
   the content of the second conductive material is in a range of about 1.5 parts by weight to about 2.5 parts by weight with respect to 100 parts by weight of the second active material layer.

5. The positive electrode for a rechargeable lithium battery of any preceding claim, wherein a weight ratio of the first particle in the first active material layer and the second particle in the second active material layer is in a range of about 10:90 to about 30:70.

6. The positive electrode for a rechargeable lithium battery of any preceding claim, wherein a total doping content of Mn included in the first active material layer and the second active material layer is in a range of about 0.49 to about 0.53.

7. The positive electrode for a rechargeable lithium battery of any preceding claim, wherein the first particle is a single crystal.

8. The positive electrode for a rechargeable lithium battery of any preceding claim, wherein the first particle is a single particle, and
the first particle has an average particle diameter in a range of about 3 $\mu$m to about 10 $\mu$m.

9. The positive electrode for a rechargeable lithium battery of any preceding claim, wherein the first particle is in the form of a secondary particle constituted with a plurality of primary particles,

the first particle has an average particle diameter in a range of about 10 $\mu$m to about 25 $\mu$m, and
the primary particles have an average particle diameter of about 8 $\mu$m or less.

10. The positive electrode for a rechargeable lithium battery of any preceding claim, wherein the first particle comprises a single particle and a secondary particle.

11. The positive electrode for a rechargeable lithium battery of any preceding claim, wherein the first particle has a BET specific surface area in a range of about 0.8 m$^2$/g to about 1.2 m$^2$/g.

12. The positive electrode for a rechargeable lithium battery of any preceding claim, wherein the second particle has an average particle diameter in a range of about 3 $\mu$m to about 10 $\mu$m, and
the plurality of primary particles of the second particle each have a particle diameter of about 200 nm or less.

13. The positive electrode for a rechargeable lithium battery of any preceding claim, wherein the second active material layer further comprises a third particle,

the third particle contains an olivine structured compound of Formula 3 below,
the third particle is a single particle, and
the third particle has a smaller average particle diameter than the second particle,

Formula 3: $Li_{a3}Mn_{x3}Fe_{y3}B3_{z3}PO_{4-b3}$

wherein in Formula 3 above, $0.8 \leq a3 \leq 1.2$, $0.4 \leq x3 \leq 0.8$, $0 \leq y3 \leq 0.6$, $0 \leq z3 \leq 0.05$, $0 \leq b3 \leq 0.05$, and $x3 + y3 + z3 = 1$ are satisfied, and
B3 includes at least one of Al, Ti, V, and Mg.

14. The positive electrode for a rechargeable lithium battery of claim 13, wherein the third particle has an average particle diameter in a range of about 100 nm to about 2 $\mu$m.

15. A rechargeable lithium battery comprising the positive electrode according to any one of claims 1-14.

# FIG. 1

COL1 AML1     30     COL2 AML2

10                          20

ELL

Li$^+$

# FIG. 2

# FIG. 3

EP 4 645 425 A2

# FIG. 4

# FIG. 5

# FIG. 6

10

AML1 { ATL2
ATL1

COL1

T2
T1

# FIG. 7

ATL1

PTC1(SP)

BND1
CDM1
FAD1

# FIG. 8

# FIG. 9

# FIG. 10

# FIG. 11

# FIG. 12

FIG. 13

# FIG. 14

# FIG. 15